# EUROPÄISCHE PATENTSCHRIFT

(11) **EP 3 237 818 B1**
(45) Veröffentlichungstag und Bekanntmachung des Hinweises auf die Patenterteilung: **09.01.2019**
(21) Anmeldenummer: 15804103.8
(22) Anmeldetag: 30.11.2015
(51) Int. Cl.: F25B 39/02, F25B 17/08, F25B 37/00, F25B 39/00, F25B 49/04, F25B 17/06, F25B 35/04

(54) **SORPTIONSMODUL**
SORPTION MODULE
MODULE DE SORPTION

(30) Priorität: 10.12.2014 DE 102014225411
(43) Veröffentlichungstag der Anmeldung: 01.11.2017
(73) Patentinhaber: Mahle International GmbH, 70376 Stuttgart (DE)
(72) Erfinder: BURK, Roland, 70469 Stuttgart (DE)
(74) Vertreter: BRP Renaud & Partner mbB Rechtsanwälte Patentanwälte Steuerberater
(86) Internationale Anmeldenummer: PCT/EP2015/078002
(87) Internationale Veröffentlichungsnummer: WO 2016/091627

(56) Entgegenhaltungen:
- EP-A1- 0 527 466
- EP-A1- 0 527 466
- EP-A1- 1 162 415
- EP-A1- 1 645 819
- EP-A2- 1 278 028
- EP-A2- 1 443 288
- EP-A2- 2 447 624
- AT-B- 410 841
- DE-A1- 10 016 352
- DE-A1-102007 047 454
- US-B2- 6 412 295

## Beschreibung

Die vorliegende Erfindung betrifft ein Sorptionsmodul für eine Sorptionstemperiereinrichtung, mit den Merkmalen des Oberbegriffs des Anspruchs 1. Die Erfindung betrifft außerdem eine mit wenigstens einem derartigen Sorptionsmodul ausgestattete Sorptionstemperiereinrichtung.

Ein herkömmliches Sorptionsmodul ist aus der WO 2013/011102 A2 bekannt und umfasst ein Gehäuse, das einen Arbeitsraum umschließt. Im Arbeitsraum sind eine Sorptionszone und eine Phasenwechselzone angeordnet. Ferner ist im Arbeitsraum ein Arbeitsmedium zwischen der Sorptionszone und der Phasenwechselzone reversibel verlagerbar. In der Sorptionszone ist eine Sorptionsstruktur angeordnet, die mit einem Sorptionspfad zum Führen eines Sorptionsmediums wärmeübertragend gekoppelt ist. In der Phasenwechselzone ist dagegen eine Phasenwechselstruktur angeordnet, die mit einem Phasenwechselpfad zum Führen eines Phasenwechselpfadmediums wärmeübertragend gekoppelt ist.

Demgegenüber weist ein gattungsgemäßes Sorptionsmodul, wie es beispielsweise aus der EP 1 645 819 A1 bekannt ist, eine Steuereinrichtung zum Steuern einer fluidischen Verbindung auf, durch die hindurch das Arbeitsmedium zwischen der Sorptionszone und der Phasenwechselzone reversibel verlagerbar ist, wobei die Steuereinrichtung ein Stellglied aufweist, das mit der fluidischen Verbindung zusammenwirkt, derart, dass das Stellglied abhängig von seiner Verstellung die fluidische Verbindung steuert. Bei diesem bekannten Sorptionsmodul ist die Steuereinrichtung durch ein Unterdrucköffnungsventil gebildet, das passiv öffnet, wenn in der Sorptionszone ein Unterdruck entsteht.

Aus der AT 410 841 B ist ein anderes Sorptionsmodul mit passiv arbeitender Stelleinrichtung zum Steuern einer fluidischen Verbindung zwischen der Sorptionszone und der Phasenwechselzone bekannt.

EP 1 645 819 A1, AT 410 841 B und DE 10 2007 047 454 B4 offenbaren jeweils ein Sorptionsmodul gemäß dem Oberbegriff des Anspruchs 1. Aus der WO 2007/068481 A1 ist ein anderes Sorptionsmodul bekannt, das einen grundsätzlich anderen Aufbau aufweist. Es umfasst eine Vielzahl von Hohlkörpern, die parallel nebeneinander angeordnet sind und einen Hohlkörperblock bilden. In jedem Hohlkörper ist jeweils eine Sorptionszone mit Sorptionsstruktur und eine Phasenwechselzone mit Phasenwechselstruktur ausgebildet, wobei in jedem Hohlkörper eine entsprechend geringe Menge an Arbeitsmedium enthalten ist, das reversibel zwischen der Sorptionszone und der Phasenwechselzone verlagerbar ist. Ein gemeinsamer Sorptionspfad ist wärmeübertragend mit den Sorptionszonen aller Hohlkörper verbunden, während ein gemeinsamer Phasenwechselpfad mit den Phasenwechselzonen aller Hohlkörper wärmeübertragend verbunden ist.
Ein Sorptionsmodul bzw. eine Sorptionstemperiereinrichtung, die mit wenigstens einem derartigen Sorptionsmodul ausgestattet ist, kann je nach Anwendungsfall zum Heizen oder zum Kühlen verwendet werden, je nachdem, ob die Anwendung das Abkühlen einer Wärmequelle oder die Aufheizung einer Wärmesenke zum Ziel hat. Ebenso sind Anwendungsfälle denkbar, bei denen gleichzeitig geheizt und gekühlt werden kann. Im vorliegenden Zusammenhang ist daher der Begriff "Temperieren" als "Kühlen und/oder Heizen" zu verstehen. Die Funktionsweise einer derartigen Sorptionstemperiereinrichtung erfordert das Vorhandensein einer Wärmequelle, wenn gekühlt werden soll, und das Vorhandensein einer Wärmesenke, wenn geheizt werden soll.
Problematisch bei einer Vielzahl derartiger Anwendungen ist jedoch der Umstand, dass sowohl Angebot und Nachfrage von Wärme und/oder Kälte häufig zeitlich auseinanderfallen wobei gegebenenfalls gleichzeitig das Temperaturniveau verfügbarer Wärmequellen niedriger liegt als das Temperaturniveau verfügbarer Wärmesenken. Ebenso ist denkbar, dass die von der Sorptionstemperiereinrichtung abgebbare Heizleistung oder Kühlleistung stark von der zum Betreiben der Sorptionstemperiereinrichtung zur Verfügung stehenden Heizleistung (Wärmequelle) bzw. Kühlleistung (Wärmesenke) verschieden sind. Gesucht wird also eine Einrichtung, die in der Lage ist, sowohl eine Wärme- und/oder Kälteleistung zwischen verschiedenen Wärmequellen und Wärmesenken zeitlich und örtlich zu verschieben, als auch Wärme entgegen dem natürlich Trend der Natur von einem niedrigeren Temperaturniveau auf ein höheres Temperaturniveau zu heben (Wärmepumpe).

Es besteht daher ein großes Interesse daran, das jeweilige Sorptionsmodul, je nach Anwendungsfall, als Kältespeicher oder als Wärmespeicher, nutzen zu können, um die gespeicherte Wärme bzw. Kälte zu jedem beliebigen Zeitpunkt bei gegebenenfalls auch verändertem Temperaturniveau freigeben zu können. Grundsätzlich ist hierzu denkbar, den Sorptionspfad und/oder den Phasenwechselpfad mit Hilfe entsprechender Steuereinrichtungen steuerbar auszugestalten. Beispielsweise kann durch Sperren des jeweiligen Pfads jeglicher Wärme- und Stoffaustausch unterbunden werden. Der apparative Aufwand hierzu ist jedoch vergleichsweise groß. Ferner muss das jeweilige Sorptionsmodul hierzu mit einer effizienten thermischen Isolation, insbesondere zur Umgebung hin, ausgestattet sein. Weiterhin ist mit einer derartigen Konzeption auch kein Wärmepumpeneffekt möglich.

Die vorliegende Erfindung beschäftigt sich mit dem Problem, für ein Sorptionsmodul der eingangs genannten bzw. für eine damit ausgestattete Sorptionstemperiereinrichtung eine verbesserte Ausführungsform anzugeben, die sich insbesondere dadurch auszeichnet, dass sie eine effiziente Nutzung des Sorptionsmoduls als Wärmespeicher und/oder als Kältespeicher und/oder als Wärmepumpe ermöglicht und dabei einen vergleichsweise einfachen und relativ preiswert realisierbaren Aufbau besitzt.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Sorptionsmodul so auszugestalten, dass die Verlagerung des Arbeitsmediums direkt gesteuert werden kann. Im Einzelnen wird vorgeschlagen, eine fluidische Verbindung, durch die hindurch das Arbeitsmedium zwischen der Sorptionszone und der Phasenwechselzone reversibel verlagerbar ist, zu steuern, wozu eine entsprechende Steuereinrichtung vorgesehen ist. Die fluidische Verbindung kann mit Hilfe der Steuereinrichtung zumindest zum Öffnen und zum Schließen gesteuert werden. Bei geöffneter fluidischer Verbindung kann das Arbeitsmedium ungehindert zwischen der Sorptionszone und der Phasenwechselzone verlagert werden. Bei geschlossener fluidischer Verbindung kann dagegen das Arbeitsmedium nicht mehr zwischen Sorptionszone und Phasenwechselzone verlagert werden. Ein Aufladeprozess der als Wärme- und/oder Kältespeicher verwendbaren Einrichtung erfolgt durch Aufheizung der Sorptionszone, wodurch das eingelagerte Arbeitsmedium durch Wärmezufuhr von der Sorptionsstruktur desorbiert wird. Aufgrund der unterschiedlichen Drücke innerhalb des Arbeitsraums kann bei geöffneter fluidischer Verbindung das dampfförmige Arbeitsmedium von der Sorptionszone zur Phasenwechselzone verlagert werden. Dort wird das Arbeitsmedium mit Hilfe der Phasenwechselstruktur kondensiert und darin in flüssiger Form eingelagert. Die dabei frei werdende Kondensationswärme kann genutzt werden oder auch ungenutzt an die Umgebung abgeführt werden. Sobald das gesamte Arbeitsmedium in der Phasenwechselstruktur eingelagert ist, kann durch Verschließen der fluidischen Verbindung dieser Zustand konserviert bzw. eingefroren werden. Die in der Sorptionszone gespeicherte Wärmeenergie und in der Phasenwechselzone gespeicherte "Kälteenergie" kann dann zu jedem beliebigen Zeitpunkt durch Öffnen der fluidischen Verbindung abgerufen werden. Je nach Anwendungsfall kann also durch Öffnen der fluidischen Verbindung die in der Sorptionszone freigesetzte Adsorptionswärme einer aufzuheizenden Wärmesenke zugeführt oder die der Phasenwechselzone entzogene Wärme zur Kühlung einer Wärmequelle verwendet werden. Dabei kann die Wärmequelle ein niedrigeres Temperaturniveau aufweisen als die Wärmesenke.

Eine besonders hohe Attraktivität des hier vorgestellten Sorptionsmoduls bzw. der damit ausgestatteten Sorptionstemperiereinrichtung besteht, wenn gleichzeitig ein Aufheizbedarf für eine Wärmesenke und ein Kühlungsbedarf für eine Wärmequelle bestehen und wenn außerdem das Temperaturniveau der zu kühlenden Wärmequelle niedriger liegt, als das der zu wärmenden Wärmesenke, wenn also eine natürliche passive Verschiebung von Wärme nicht möglich ist. Mit anderen Worten, die Sorptionstemperiereinrichtung arbeitet in diesem Fall als Wärmepumpe.

Die jeweilige Sorptionsstruktur ist im vorliegenden Zusammenhang zweckmäßig zusätzlich bzw. separat zu einer Wand vorgesehen, welche die Sorptionszone begrenzt und an welcher die Sorptionsstruktur angeordnet sein kann. Die jeweilige Phasenwechselstruktur ist im vorliegenden Zusammenhang zweckmäßig zusätzlich bzw. separat zu einer Wand vorgesehen, welche die Phasenwechselzone begrenzt und an welcher die Phasenwechselstruktur angeordnet sein kann.

Gemäß einer vorteilhaften Ausführungsform kann im Gehäuse eine Trennwand vorgesehen sein, welche die Sorptionszone von der Phasenwechselzone fluidisch trennt. Die fluidische Verbindung, durch die hindurch das Arbeitsmedium zwischen der Sorptionszone und der Phasenwechselzone reversibel verlagerbar ist, kann nun durch wenigstens eine Verbindungsöffnung gebildet sein, die in dieser Trennwand ausgebildet ist. Diese Verbindungsöffnung ist dann mit besagter Steuereinrichtung steuerbar, derart, dass die jeweilige Verbindungsöffnung mittels der Steuereinrichtung zumindest zwischen einem geöffneten Zustand (Offenstellung) und einem geschlossenen Zustand (Schließstellung) verstellt werden kann. Die Integration einer derartigen Trennwand in das Gehäuse lässt sich besonders einfach und preiswert realisieren. Bei dieser Bauweise ist dann auch die steuerbare fluidische Verbindung innerhalb des Gehäuses bzw. im Arbeitsraum realisiert, wodurch der Aufbau insgesamt relativ kompakt ist. Alternativ ist grundsätzlich auch eine Ausführungsform denkbar, bei welcher die fluidische Verbindung mittels eines speziellen Kanals realisiert ist, der von der Sorptionszone zur Phasenwechselzone führt. Ein derartiger Kanal lässt sich besonders einfach steuern und dabei innerhalb und/oder außerhalb des Gehäuses verlegen, erfordert jedoch einen erhöhten baulichen und konstruktiven Aufwand.

Erfindungsgemäß weist die Steuereinrichtung ein Stellglied sowie einen Stellantrieb zum Verstellen des Stellglieds auf. Der Stellantrieb kann dabei grundsätzlich beliebiger Natur sein. Erfindungsgemäß arbeitet er elektrisch oder elektromagnetisch. Das Stellglied wirkt mit der fluidischen Verbindung zusammen, und zwar derart, dass das Stellglied abhängig von seiner Verstellung die fluidische Verbindung steuert. Mit anderen Worten, der Stellantrieb verstellt das Stellglied zum Steuern der fluidischen Verbindung. Hierdurch besitzt die Steuereinrichtung einen einfachen Aufbau, so dass sie sich preiswert realisieren lässt und eine hohe Zuverlässigkeit besitzt.

Gemäß einer Weiterbildung kann das Stellglied als Ventil ausgestaltet sein, das mit einem verstellbaren Ventilglied zum Steuern der fluidischen Verbindung ausgestattet ist. Das Stellglied erhält hierdurch ebenfalls einen sehr einfachen Aufbau, was die Realisierung preiswert und die Funktionsweise zuverlässig macht.

Bei einer anderen Weiterbildung kann das Ventilglied mit einem Ventilsitz zusammenwirken, der in der vorgenannten Trennwand vorgesehen ist und der die jeweilige Verbindungsöffnung einfasst. Hierdurch lässt sich eine effiziente Schließfunktion für das Ventilglied und für die Verbindungsöffnung realisieren. Insbesondere können Ventilglied und Ventilsitz gezielt so aufeinander abgestimmt sein, z.B. durch eine konische Formgebung, dass sich beim Schließen der Verbindungsöffnung eine selbsttätige Zentrierung des Ventilglieds im Ventilsitz ergibt. Das Ventilglied und der Ventilsitz sind zweckmäßig kreisförmig bzw. rotationssymmetrisch ausgestaltet, so dass die Schließstellung mit hoher Zuverlässigkeit eingestellt werden kann.

Bei einer anderen Weiterbildung kann das Ventil als Überdrucköffnungsventil ausgestaltet sein, das so aufgebaut und angeordnet ist, dass es bei geschlossener fluidischer Verbindung ab einem vorbestimmten Überdruck in der Sorptionszone relativ zur Phasenwechselzone die fluidische Verbindung öffnet. Durch diese Maßnahme lässt sich ein übermäßiger Druckanstieg in der Sorptionszone vermeiden, was beispielsweise dann auftreten kann, wenn während des Aufladeprozesses, also beim Beheizen der Sorptionszone das Ventil die fluidische Verbindung verschließen sollte. Falls dagegen beim Abkühlen des Sorptionsmoduls das Ventil die fluidische Verbindung verschließen sollte, führt der dann in der Phasenwechselzone relativ zur Sorptionszone entstehende Überdruck dazu, dass das Ventilglied die fluidische Verbindung stärker verschließt bzw. stärker gegen den Ventilsitz gedrückt wird. Dies ist jedoch im Vergleich zum vorstehend genannten umgekehrten Fall unschädlich, sondern trägt nur zu einer Erhöhung dessen Dichtigkeit bei.

Gemäß einer Weiterbildung kann das Überdrucköffnungsventil ein Kopplungselement aufweisen, das mit Hilfe des Stellantriebs verstellbar ist und das über eine Vorspannfeder mit dem Ventilglied gekoppelt ist. Das bedeutet, dass das Ventilglied relativ zum Koppelelement gegen die Vorspannkraft der Vorspannfeder verstellbar ist, auch wenn das Kopplungselement vom Stellantrieb festgehalten ist und sich selbst nicht verstellen kann.

Die Überdruck-Öffnungsfunktion kann alternativ auch durch eine spezielle Formgebung einer elastischen Dichtung erfolgen, die bei einer Druckdifferenz von außen nach innen dichtet und bei einer Druckdifferenz von innen nach außen durch elastische Verformung vom Ventilsitz abhebt.

Erfindungsgemäß ist der Stellantrieb außen an einer Außenwandung des Gehäuses angebaut, wobei das Stellglied eine in der Außenwandung ausgebildete Durchgangsöffnung durchsetzt und im Arbeitsraum mit der fluidischen Verbindung zusammenwirkt. Durch diese Bauweise lässt sich der Stellantrieb quasi an jeder beliebigen, geeigneten Stelle außen am Gehäuse anbringen, wodurch er, zum Beispiel für Wartungszwecke, gut zugänglich ist. Insbesondere muss zur Wartung der Steuereinrichtung nicht der Arbeitsraum geöffnet werden, wodurch Arbeitsmedium entweichen könnte und/oder Fremdgase, z.B. Luft, eindringen könnten.

Bei einer Weiterbildung kann zum Abdichten der Durchgangsöffnung gegenüber dem Arbeitsraum eine elastische Membran vorgesehen sein, die einerseits dicht mit dem Stellglied und andererseits dicht mit der Außenwandung verbunden ist. Durch die Elastizität dieser Membran kann die Membran den Verstellbewegungen des Stellglieds folgen, so dass in jeder Relativlage des Stellglieds die gewünschte Abdichtung der Durchgangsöffnung gewährleistet ist. Mit Hilfe dieser Membran lässt sich somit eine Leckage des Arbeitsmediums durch das Gehäuse in eine Umgebung des Gehäuses und/oder eine Leckage eines Fremdgases, wie z.B. Luft, aus der Umgebung in das Gehäuse hinein weitgehend, vorzugsweise vollständig, vermeiden. Die Membran kann flach ausgebildet sein. Ebenso kann die Membran als Balg ausgestaltet sein. Vorteilhafterweise ist die Membran beziehungsweise der Balg aus einem vergleichsweise dünnen Metallblech hergestellt, das mit Hilfe einer Wellenstruktur oder Sickenstruktur eine entsprechende Beweglichkeit bzw. Elastizität besitzt.

Bei einer anderen Ausführungsform kann das Gehäuse quaderförmig ausgestaltet sein, wobei dann im Gehäuse die Sorptionszone und die Phasenwechselzone nebeneinander angeordnet sind. Der Begriff "nebeneinander" umfasst dabei horizontal nebeneinander ebenso wie vertikal nebeneinander bzw. übereinander. Die vorstehend genannte Trennwand ist nun zwischen der Sorptionszone und der Phasenwechselzone angeordnet. In diesem Fall bildet die Trennwand innerhalb des Gehäuses einen Zwischenboden, der einen ersten Abschnitt einer Außenwandung des Gehäuses mit einem zweiten Abschnitt der Außenwandung verbindet, welcher dem ersten Abschnitt gegenüberliegt.

Bei einer Weiterbildung kann die Trennwand eine Stufe aufweisen, in welcher die wenigstens eine Verbindungsöffnung angeordnet ist. Insbesondere kann in dieser Stufe der vorstehend genannte Ventilsitz angeordnet sein. Durch die Unterbringung der Verbindungsöffnung in der Stufe vereinfacht sich die Anordnung der Steuereinrichtung. Diese kann nämlich beispielsweise in einem der Stufe gegenüberliegenden Abschnitt der Außenwandung des Gehäuses angeordnet werden.

Bei einer alternativen Ausführungsform kann das Gehäuse zylindrisch ausgestaltet sein, so dass es eine Längsmittelachse und einen bezüglich dieser Längsmittelachse in Umfangsrichtung umlaufenden Mantel besitzt. Die Phasenwechselzone und die Sorptionszone sind dabei, z.B. konzentrisch, ineinander angeordnet, wobei die Sorptionszone innerhalb der Phasenwechselzone angeordnet ist, so dass die Phasenwechselzone die Sorptionszone in der Umfangsrichtung des Gehäuses ringförmig umschließt. Die vorstehend genannte Trennwand ist dann als zylindrische Hülse, also ringförmig ausgestaltet und erstreckt sich radial zwischen der Sorptionszone und der Phasenwechselzone. Mit der zylindrischen Bauweise des Gehäuses können für das Sorptionsmodul insbesondere Fertigungskosten reduziert werden..

Bei einer Weiterbildung kann ein sich in der Umfangsrichtung des Gehäuses erstreckender Mantel des zylindrischen Gehäuses doppelwandig und hohlwandig ausgestaltet sein. Dies lässt sich beispielsweise dadurch realisieren, dass der Mantel eine der Umgebung des Gehäuses ausgesetzte Außenwand und eine dem Arbeitsraum ausgesetzte Innenwand aufweist, die voneinander beabstandet angeordnet sind, derart, dass sich zwischen Innenwand und Außenwand ein Hohlraum ausbildet. Zur Stabilisierung des Mantels können Distanzelemente vorgesehen sein, über die Innenwand und Außenwand aneinander abgestützt sind. Insbesondere können derartige Distanzelemente integral an der Innenwand oder an der Außenwand ausgeformt sein, beispielsweise in Form entsprechender Einprägungen. Der Phasenwechselpfad ist nun zweckmäßig durch den hohlen Mantel hindurchgeführt. Auf diese Weise wird der hohle Mantel in den Phasenwechselpfad integriert, so dass im Betrieb des Sorptionsmoduls Phasenwechselpfadmedium auch durch den Mantel strömt. Durch diese Maßnahme erhält der Mantel bzw. das Gehäuse eine Zusatzfunktion in Form der Fähigkeit einer direkten Zufuhr bzw. Abfuhr von Wärme durch ein Wärmeübertragungsfluid. Um den Wärmeübergang zwischen dem Phasenwechselpfadmedium und der Phasenwechselstruktur zu erhöhen, kann der Hohlraum zwischen Innen- und Außenmantel auch mit einer abstützenden und flächenvergrößernden Rippenstruktur ausgefüllt sein, die wärmeleitend mit der Innenwand verbunden ist.

Bei einer anderen Weiterbildung kann die Phasenwechselstruktur mit einer dem Arbeitsraum zugewandten Innenseite des Mantels wärmeübertragend in Kontakt stehen. Hierdurch erfolgt eine wärmeübertragende Kopplung zwischen der Phasenwechselstruktur und dem Mantel und somit mit dem Phasenwechselpfad, was den Aufbau der Phasenwechselstruktur erheblich vereinfacht. Des Weiteren kann das durch Kondensation sich niederschlagende Arbeitsmedium von der Phasenwechselstruktur vollständig aufgenommen werden, wobei die gesamte im Sorptionsmodul auftretende Kondensationswärme von dem Wärmeübertragungsfluid aufgenommen werden kann.

Zweckmäßig kann nun die Phasenwechselstruktur von der zylindrischen Trennwand radial beabstandet sein. Hierdurch kann das gasförmige Arbeitsmedium besonders einfach über die gesamte Phasenwechselstruktur verteilt werden. Außerdem kann ein Wärmezufluss, insbesondere durch Wärmeabstrahlung von der innenliegenden heißeren Sorptionszone zur außenliegenden Phasenwechselstruktur über die Trennwand auf diese Weise vermieden werden.
Des Weiteren kann gemäß einer vorteilhaften Ausführungsform vorgesehen sein, die Phasenwechselstruktur mit Hilfe wenigstens eines Federelements gegen die Innenseite des Mantels vorzuspannen. Ein derartiger vorgespannter Kontakt verbessert die Wärmeübertragung durch Wärmeleitung. Der Kontakt zwischen Phasenwechselstruktur und Mantel ist zweckmäßig direkt und insbesondere stoffschlüssig, kann jedoch mit Hilfe eines Wärmeleitmaterials, insbesondere einer Wärmeleitpaste, eines Wärmeleitklebers oder eines Weichlots oder dergleichen verbessert werden.

Vorzugsweise ist eine Sorptionstemperiereinrichtung mit wenigstens einem Sorptionsmodul der vorstehend genannten Art ausgestattet. Vorzugsweise sind jedoch zwei oder mehr derartige Sorptionsmodule in der jeweiligen Sorptionstemperiereinrichtung vorgesehen. Außerdem weist die Sorptionstemperiereinrichtung wenigstens einen Sorptionskreis auf, in dem das Sorptionspfadmedium zirkuliert und der in den Sorptionspfad des jeweiligen Sorptionsmoduls eingebunden ist. Außerdem ist zumindest ein Phasenwechselkreis vorgesehen, in dem das Phasenwechselpfadmedium zirkuliert und der in den Phasenwechselpfad des jeweiligen Sorptionsmoduls eingebunden ist.
Weitere wichtige Merkmale und Vorteile der Erfindung ergeben sich aus den Unteransprüchen, aus den Zeichnungen und aus der zugehörigen Figurenbeschreibung anhand der Zeichnungen.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung eines Sorptionsmoduls einer Sorptionstemperiereinrichtung mit einer Speicherfunktionalität,
- Fig. 2: einen Querschnitt durch eine erste Ausführungsform eines Sorptionsmoduls mit Speicherfunktionalität,
- Fig. 3: einen Längsschnitt des Sorptionsmoduls, jedoch bei einer anderen Ausführungsform,
- Fig. 4: einen Querschnitt des Sorptionsmoduls aus Fig. 3 gemäß Schnittlinien IV in Fig. 3,
- Fig. 5: einen Querschnitt des Sorptionsmoduls aus Fig. 3 entsprechend Schnittlinien V in Fig. 3,
- Fig. 6: eine isometrische Ansicht eines Federelements des Sorptionsmoduls aus Fig. 3,
- Fig. 7-9: Querschnitte des Sorptionsmoduls wie in Fig. 5 im Bereich einer Steuereinrichtung, jedoch bei verschiedenen Ausführungsformen.

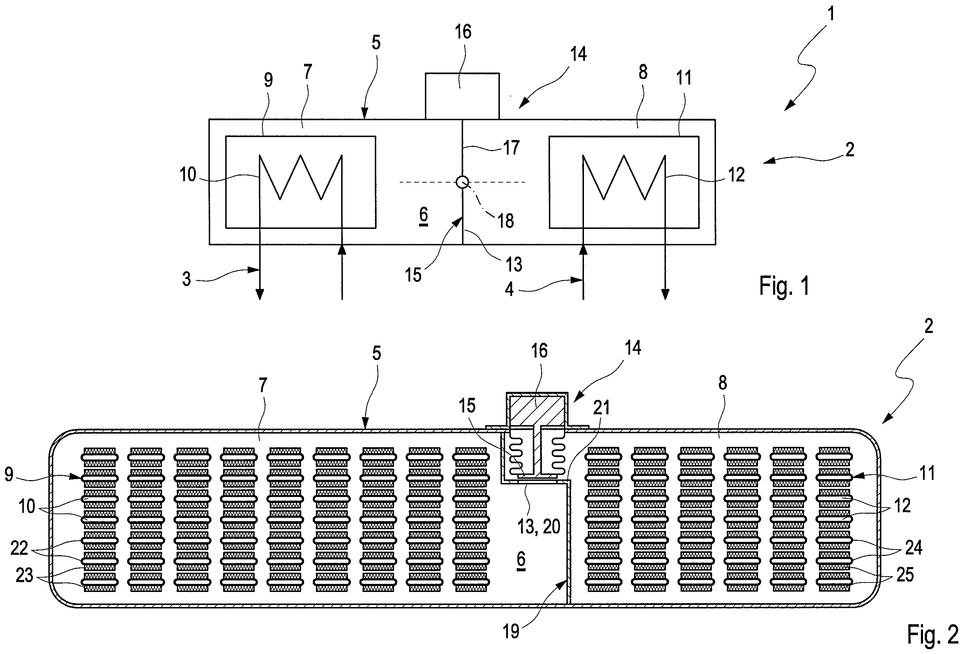

Gemäß Fig. 1 umfasst eine Sorptionstemperiereinrichtung 1 zumindest ein Sorptionsmodul 2, einen Sorptionskreis 3 und einen Phasenwechselkreis 4. Im Beispiel der Fig. 1 weist die Sorptionstemperiereinrichtung 1 nur ein einziges Sorptionsmodul 2 auf. Bei anderen Ausführungsformen kann die Sorptionstemperiereinrichtung 1 auch zwei oder mehr derartige Sorptionsmodule 2 aufweisen, die in Reihe oder parallel geschaltet sein können. Ebenso ist denkbar, dass die Sorptionsmodule 2 innerhalb der Sorptionstemperiereinrichtung 1 individuell ansteuerbar sind. Die Ansteuerbarkeit der Sorptionsmodule 2 kann zuächst in dem Sinne erfolgen, dass die Sorptionskreise 3 und/oder die Phasenwechselkreise 4 über nicht dargestellte Umschaltventile nach einem wählbaren Algorithmus gleichzeitig oder nacheinander mit Wärmequellen bzw. Wärmesenken geeigneter Temperaturniveaus verbunden werden, um diese aufzuheizen bzw. abzukühlen. Eine erfindungsmäßige zusätzliche Ansteuermöglichkeit zur Erzielung einer Wärme- oder Kältespeicherfunktionalität wird weiter unten erläutert.

Das jeweilige Sorptionsmodul 2 weist gemäß den Fig. 1-9 jeweils ein Gehäuse 5 auf, das einen Arbeitsraum 6 umschließt. Im Arbeitsraum 6 befinden sich eine Sorptionszone 7 sowie eine Phasenwechselzone 8. Im Arbeitsraum 6 ist außerdem ein hier nicht näher dargestelltes Arbeitsmedium angeordnet, das zwischen der Sorptionszone 7 und der Phasenwechselzone 8 reversibel verlagerbar ist. In der Sorptionszone 7 ist eine Sorptionsstruktur 9 angeordnet. Diese ist mit einem Sorptionspfad 10 wärmeübertragend gekoppelt, der ein nicht dargestelltes Sorptionspfadmedium führt. Der Sorptionspfad 10 ist in den Sorptionskreis 3 eingebunden. Das Sorptionspfadmedium zirkuliert im Sorptionspfad 3. In der Phasenwechselzone 8 ist eine Phasenwechselstruktur 11 angeordnet, die mit einem Phasenwechselpfad 12 wärmeübertragend gekoppelt ist. Der Phasenwechselpfad 12 führt ein nicht dargestelltes Phasenwechselpfadmedium, das im Phasenwechselkreis 4 zirkuliert. Der Phasenwechselpfad 12 ist in den Phasenwechselkreis 4 eingebunden. Der Sorptionspfad 10 und der Phasenwechselpfad 12 sind so durch das Gehäuse 5 hindurchgeführt, dass eine fluidische Trennung zwischen Sorptionspfadmedium und Arbeitsmedium, zwischen Sorptionspfadmedium und Phasenwechselpfadmedium und zwischen Phasenwechselpfadmedium und Arbeitsmedium vorliegt.

Für die reversible Verlagerung des Arbeitsmediums zwischen der Sorptionszone 7 und der Phasenwechselzone 8 ist eine fluidische Verbindung 13 vorgesehen, durch die hindurch das Arbeitsmedium zwischen der Sorptionszone 7 und der Phasenwechselzone 8 reversibel verlagerbar ist. Diese fluidische Verbindung 13 ist dabei mittels einer Steuereinrichtung 14 steuerbar, zumindest derart, dass die fluidische Verbindung 13 mit Hilfe der Steuereinrichtung 14 geöffnet und geschlossen werden kann. Grundsätzlich ist auch eine Ausführungsform denkbar, bei der zumindest ein Zwischenzustand einstellbar ist. Zweckmäßig weist die Steuereinrichtung 4 ein Stellglied 15 zum Steuern der fluidischen Verbindung 13 sowie einen Stellantrieb 16 zum Verstellen des Stellglieds 15 auf. Das Stellglied 15 wirkt mit der fluidischen Verbindung 13 zusammen, so dass das Stellglied 15 abhängig von seiner Verstellung die fluidische Verbindung 13 steuert, diese also insbesondere öffnet oder verschließt.

Im vereinfachten Beispiel der Fig. 1 ist die fluidische Verbindung 13 durch einen freien Querschnitt des Gehäuses 5 gebildet, der zwischen der Sorptionszone 7 und der Phasenwechselzone 8 liegt. Das Stellglied 15 ist hier durch eine Klappe 17 gebildet, die um eine Schwenkachse 18 verschwenkbar im Gehäuse 5 angeordnet ist. Die Klappe 17 ist dabei zwischen einer mit durchgezogener Linie dargestellten Schließstellung und einer mit unterbrochener Linie dargestellten Offenstellung verschwenkbar.

Die fluidische Verbindung 13 ist zweckmäßig im Inneren des Gehäuses 5, also im Arbeitsraum 6 vorgesehen, wodurch das Sorptionsmodul 2 einen kompakten Aufbau besitzt.

Bei den Ausführungsformen der Fig. 2-5 ist im Gehäuse 5 eine Trennwand 19 angeordnet, derart, dass sie im Arbeitsraum 6 eine fluidische Trennung zwischen Sorptionszone 7 und Phasenwechselzone 8 bewirkt. Die Trennwand 19 weist jedoch zumindest eine Verbindungsöffnung 20 auf, welche die fluidische Verbindung 13 bildet. Die Steuereinrichtung 14 ist nun so konfiguriert, dass sie ein Steuern dieser Verbindungsöffnung 20 ermöglicht, also zumindest ein Öffnen und Schließen der Verbindungsöffnung 20 bewirkt.

Bei der in Fig. 2 gezeigten Ausführungsform ist das Gehäuse 5 quaderförmig ausgestaltet, wobei die Sorptionszone 7 und die Phasenwechselzone 8 dann im Gehäuse 5 nebeneinander angeordnet sind. Die Trennwand 19 befindet sich zwischen der Sorptionszone 7 und der Phasenwechselzone 8 und verbindet dabei gegenüberliegende Abschnitte des Gehäuses 5 miteinander. Im Beispiel der Fig. 2 besitzt die Trennwand 19 eine Stufe 21, in der die jeweilige Verbindungsöffnung 20 angeordnet ist. Auf diese Weise vereinfacht sich die Kopplung mit der Steuereinrichtung 14, insbesondere wenn die Stufe 21 parallel und proximal zu einem Abschnitt des Gehäuses 5 verläuft, an dem der Stellantrieb 16 außen am Gehäuse 5 angebracht ist.

Im Beispiel der Fig. 2 ist der Sorptionspfad 10 durch eine Vielzahl von Rohrstücken 22 gebildet, durch die das Sorptionspfadmedium hindurch geführt ist und die an ihrer Außenseite mit Sorptionsmaterial 23 versehen sind. Hierdurch ist der Sorptionspfad 10 in die Sorptionsstruktur 9, die durch das Sorptionsmaterial 23 gebildet ist, integriert. Der Phasenwechselpfad 12 ist hier ebenfalls durch eine Vielzahl von Rohrstücken 24 gebildet, durch die das Phasenwechselpfadmedium hindurchgeführt ist und die an ihrer Außenseite ein Phasenwechselmaterial 25 aufweisen. Das Phasenwechselmaterial 25 bildet die Phasenwechselstruktur 11, in die der Phasenwechselpfad 12 integriert ist.

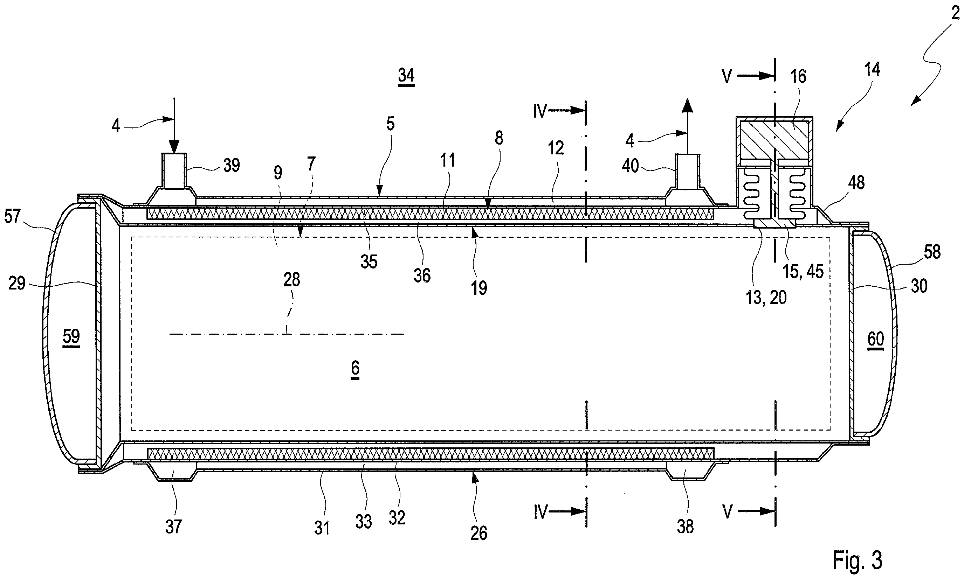

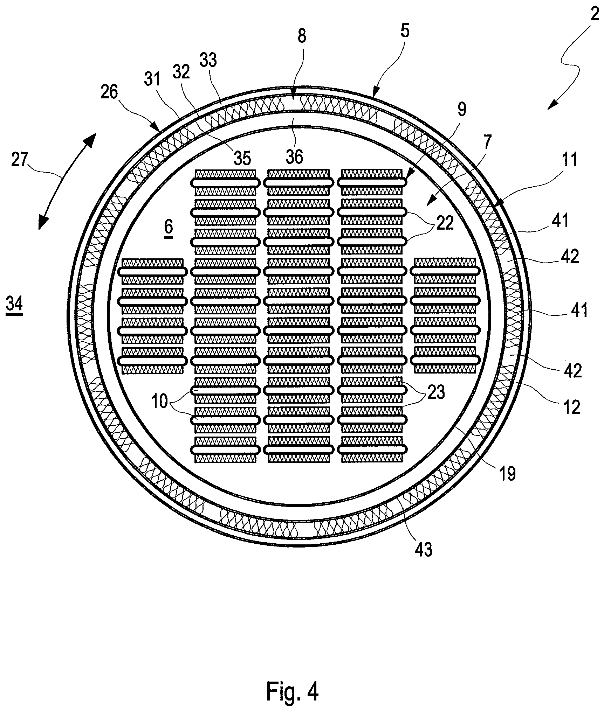

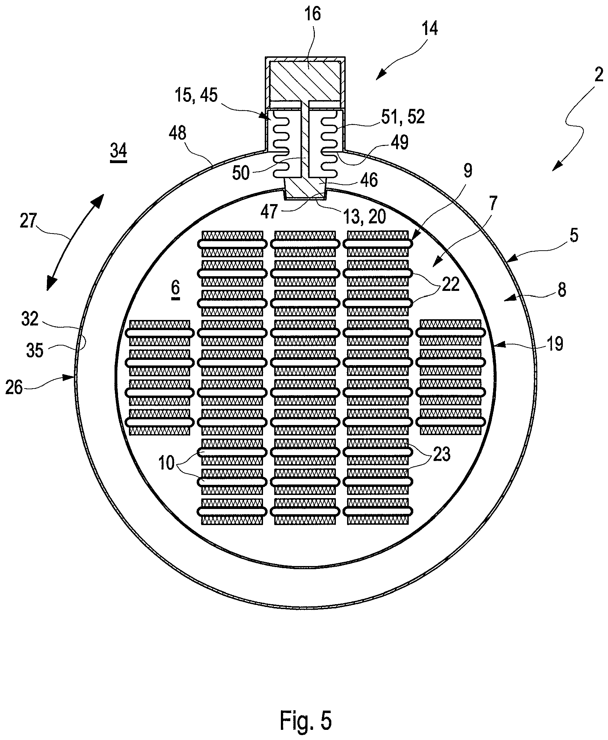

Bei der in den Fig. 3-5 gezeigten Ausführungsform ist das Gehäuse 5 zylindrisch ausgestaltet, so dass es einen Mantel 26 aufweist, der sich in einer in den Fig. 4 und 5 durch einen Doppelpfeil angedeuteten Umfangsrichtung 27 geschlossen erstreckt, wobei sich die Umfangsrichtung 27 auf eine Längsmittelachse 28 des Gehäuses 5 bezieht. Die Phasenwechselzone 8 ist hierbei so angeordnet, dass sie die Sorptionszone 7 in der Umfangsrichtung 27 ringförmig umschließt. Die Trennwand 19 ist ihrerseits zylindrisch ausgestaltet und im Gehäuse 5 so angeordnet, dass sie sich radial zwischen der Sorptionszone 7 und der Phasenwechselzone 8 ringförmig erstreckt. Im Bereich axialer Endböden 29, 30 ist die rohrförmige Trennwand 19 fest und dicht mit dem Gehäuse 5 verbunden. Im Bereich dieser Endböden 29, 30 sind gemäß Fig. 3 am Gehäuse 5 außerdem Endkappen 57, 58 angebracht, mit denen im Gehäuse 5 Kammern 59, 60 ausgebildet werden, die jeweils zu den Längsenden der Rohrkörper 22 offen sind, so dass diese Rohrkörper 22 in die Kammern 59, 60 einmünden. Beispielsweise bildet die eine Kammer 59 einen Sammelraum zum Sammeln und Abführen des Sorptionspfadmediums von den Rohrkörpern 22, während die andere Kammer 60 einen Verteilerraum zum Zuführen und Verteilen des Sorptionspfadmediums auf die Rohrkörper 22 bildet. Die beiden Kammern 59 und 60 besitzen hier nicht dargestellte Anschlussstutzen zur Zu- bzw. Abführung des Sorptionspfadmediums.

Die in den Fig. 3-5 gezeigte Ausführungsform des Sorptionsmoduls 2 zeigt außerdem eine weitere Besonderheit. Gemäß den Fig. 3 und 4 ist der Mantel 26 zumindest in einem Längsabschnitt doppelwandig und hohlwandig ausgestaltet, so dass er eine Außenwand 31 und eine Innenwand 32 aufweist, die radial voneinander beabstandet sind und einen zylindrischen Hohlraum 33 begrenzen. Die Außenwand 31 ist einer Umgebung 34 des Gehäuses 5 ausgesetzt, während die Innenwand 32 dem Arbeitsraum 6 ausgesetzt ist. Durch den Hohlraum 33 bzw. durch den hohlen Mantel 26 ist der Phasenwechselpfad 12 hindurchgeführt. Die Phasenwechselstruktur 11 liegt bei dieser Ausführungsform an einer dem Arbeitsraum 3 zugewandten Innenseite 35 des Mantels 26 bzw. der Innenwand 32 an und steht mit dieser wärmeübertragend in Verbindung. Dabei kann die Phasenwechselstruktur 11 unmittelbar mit der Innenwand 32 kontaktiert sein. Ebenfalls ist eine Kontaktierung über ein Wärmeleitmaterial denkbar. Ebenso ist eine stoffschlüssige Anbindung denkbar, z.B. durch Weichlöten. Ferner ist die Phasenwechselstruktur 11 radial von der Trennwand 19 beabstandet, wodurch zwischen der Trennwand 19 und der Phasenwechselstruktur 11 ein Zwischenraum 36 entsteht, durch den das Arbeitsmedium der Phasenwechselstruktur 11 zugeführt bzw. davon abgeführt werden kann. In diesem Fall ist die Phasenwechselstruktur 11 an den Phasenwechselpfad 12, der hier durch den Mantel 5 gebildet ist, angebaut, so dass keine Integration wie bei der in Fig. 2 gezeigten Ausführungsform vorliegt.

Der Phasenwechselpfad 12 besitzt hier außerdem einen in den Mantel 26 integrierten Verteilerkanal 37, der in der Umfangsrichtung 27 geschlossen umläuft und axial zum Hohlraum 33 offen ist. Ferner ist ein Sammelkanal 38 im Mantel 26 ausgebildet, der in der Umfangsrichtung 27 geschlossen umläuft und ebenfalls axial zum Hohlraum 33 offen ist. Im Bereich des Verteilerkanals 37 ist ein Zuführanschluss 39 an dem Mantel 26 angeschlossen, durch den das Phasenwechselpfadmedium zugeführt wird. Im Bereich des Sammelkanals 38 ist dagegen ein Abführanschluss 40 am Mantel 26 angeordnet, durch den das Phasenwechselpfadmedium abführbar ist.

Die Phasenwechselstruktur 11 ist zweckmäßig als Kapillarstruktur konzipiert, so dass sie kondensiertes Arbeitsmedium festhalten kann. Eine derartige Kapillarstruktur ist beispielsweise aus der EP 1 918 668 B1 bekannt, deren Offenbarungsgehalt hiermit durch Bezugnahme vollinhaltlich der vorliegenden Beschreibung hinzugefügt wird.

Wie sich den Figuren 4 und 5 entnehmen lässt, kann bei dieser Ausführungsform die Sorptionsstruktur 9 einen ähnlichen Aufbau aufweisen wie bei der in Fig. 2 gezeigten Ausführungsform. Dementsprechend sind auch hier mehrere Rohrkörper 22 vorgesehen, an denen Sorptionsmaterial 23 angebracht ist.

Zweckmäßig kann die Phasenwechselstruktur 11 gemäß Fig. 4 in der Umfangsrichtung 27 segmentiert sein, so dass sie mehrere Streifen 41 umfasst, die sich jeweils in der Längsrichtung des Gehäuses 5 erstrecken und in der Umfangsrichtung 27 zueinander benachbart angeordnet sind. Zwischen benachbarten Streifen 41 kann dabei jeweils ein Spalt 42 vorgesehen sein. Der Spalt 42 ist zweckmäßig so dimensioniert, dass er eine Kapillarwirkung der Phasenwechselstruktur 11 unterbrechen kann. Auch in der Gehäuselängsrichtung kann eine hier nicht dargestellte Segmentierung in kleinere Strukturpakete von Vorteil sein, um Ablaufeffekte gespeicherten Arbeitsmediums durch Gewichts- und/oder Beschleunigungskräfte zu reduzieren bzw. zu unterbinden. Hierdurch verbessert sich die homogene Verteilung des Arbeitsmediums innerhalb der Phasenwechselstruktur 11.

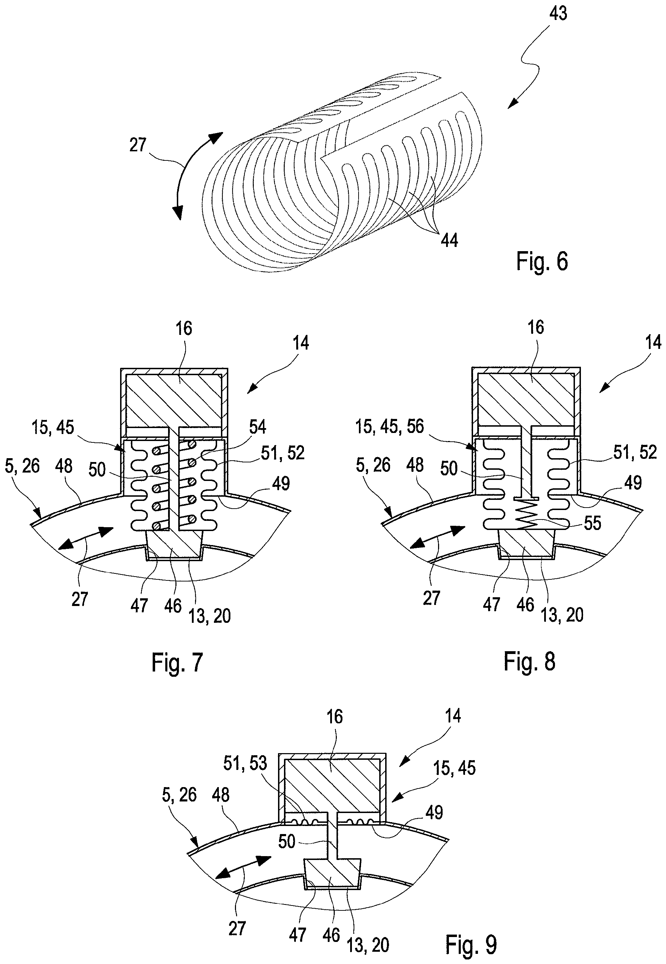

Des Weiteren kann die Phasenwechselstruktur 11 mit Hilfe wenigstens eines Federelements 43 radial nach außen gegen den Mantel 5 bzw. gegen die Innenwand 32 vorgespannt sein. Durch einen derartigen vorgespannten oder angepressten Kontakt zwischen Phasenwechselstruktur 11 und Mantel 26 kann die Wärmeübertragung zwischen Phasenwechselstruktur 11 und dem als Phasenwechselpfad 12 dienenden Mantel 26 verbessert werden. In Fig. 6 ist rein exemplarisch ein derartiges Federelement 43 dargestellt. Erkennbar ist es blechförmig konzipiert und zylindrisch geformt, wodurch es besonders einfach in das Gehäuse 5 eingesetzt werden kann. Zweckmäßig kann das Federelement 43 gleichzeitig als Träger für die Phasenwechselstruktur 11 dienen, was die Montage des Sorptionsmoduls 2 vereinfacht. Gemäß Fig. 6 weist das Federelement 43 eine Vielzahl von Öffnungen 44 auf, wodurch es perforiert ist und für das Arbeitsmedium durchlässig ist. Somit kann das Arbeitsmedium leicht zwischen der Phasenwechselstruktur 11 und dem Zwischenraum 36 durch das Federelement 43 hindurch verlagert werden.

Mit Bezug auf die Fig. 5 und 7-9 wird nachfolgend auf besondere Ausgestaltungen der Steuereinrichtung 14 näher eingegangen, die jedoch auch bei anderen Ausgestaltungen des Sorptionsmoduls 2 realisierbar sind, also nicht nur bei der in den Fig. 3-5 gezeigten Ausführungsform, sondern auch bei der in Fig. 2 gezeigten Ausführungsform sowie bei anderen, hier nicht gezeigten Ausführungsformen, solange sie von den Ansprüchen erfasst sind.

Bei den gezeigten Ausführungsformen umfasst die Steuereinrichtung 14 wie erwähnt den Stellantrieb 16 und ein Stellglied 15, das mit Hilfe des Stellantriebs 16 verstellbar ist und das mit der jeweiligen Verbindungsöffnung 20 zusammenwirkt, um diese zu steuern, also insbesondere um diese zu öffnen und zu schließen. Es ist klar, dass zusätzlich zu einer Offenstellung und einer Schließstellung grundsätzlich auch beliebig viele Zwischenstellungen einstellbar sein können. Das Stellglied 15 ist dabei zweckmäßig als Ventil 45 ausgestaltet, das ein verstellbares Ventilglied 46 aufweist, mit dessen Hilfe die fluidische Verbindung 13 bzw. die Verbindungsöffnung 20 gesteuert werden kann. Um die Effizienz des Ventils 45 zu verbessern, ist ein Ventilsitz 47 vorgesehen, der an der Trennwand 19 ausgebildet ist und der die jeweilige Verbindungsöffnung 20 einfasst. Bei den gezeigten Ausführungsformen sind das Ventilglied 46 und der Ventilsitz 47 konisch gestaltet, wodurch sie selbstzentrierend wirken, was eine zuverlässige Funktionsweise des Ventils 45 unterstützt.

Bei allen Ausführungsformen ist der Stellantrieb 16 außen an eine Außenwandung 48 des Gehäuses 5 angebaut. Im Beispiel der Fig. 3 ist die Außenwandung 48 im Bereich des Stellantriebs 16 durch den Mantel 26 gebildet, jedoch außerhalb des doppelwandigen Bereichs, was die Realisierbarkeit vereinfacht. Denn in der Außenwand 48 ist eine Durchgangsöffnung 49 vorgesehen, die vom Stellglied 15 durchsetzt ist, so dass das Stellglied 15 im Arbeitsraum 6 mit der fluidischen Verbindung 13 zusammenwirken kann. Im Einzelnen umfasst das Stellglied 15 bzw. das Ventil 45 hierzu ein Kopplungselement 50, über das der Stellantrieb 16 mit dem Ventilglied 46 verbunden ist. Hierbei durchsetzt das Kopplungselement 50 die Durchgangsöffnung 49, so dass das Ventilglied 46 im Arbeitsraum 6 mit dem Ventilsitz 47 zusammenwirken kann, um die Verbindungsöffnung 20 zu steuern.

Ferner ist die Steuereinrichtung 14 mit einer flexiblen und/oder elastischen Membran 51 ausgestattet. Diese ist einerseits dicht mit dem Stellglied 15, hier mit dem Ventilglied 46, und andererseits dicht mit der Außenwandung 48 verbunden. Bei den Ausführungsformen der Figuren 5, 7 und 8 ist die Membran 51 als Balg 52 ausgestaltet. Bei der in Fig. 9 gezeigten Ausführungsform ist die Membran 51 als Flachmembran 53 ausgestaltet. Die Membran 51 ist dabei so ausgestaltet und angeordnet, dass sie die Durchgangsöffnung 49 zwischen der Umgebung und dem Arbeitsraum 6 hermetisch dichtet.

Gemäß der in Fig. 7 gezeigten Ausführungsform kann zur Unterstützung des Stellantriebs 16 eine Ausgleichsfeder 54 vorgesehen sein, die die Stellkräfte des Stellantriebs 16 zur Steuerung des Stellgliedes 15 bzw. des Ventilglieds 46 so ausgleicht, dass die zusätzlichen auf das Stellglied 15 wirkenden Druckkräfte kompensiert werden. Insbesondere kann die Ausgleichsfeder 54 somit einen in der Sorptionszone 7 entstehenden Unterdruck gegenüber einem in der Umgebung 34 herrschenden atmosphärischen Umgebungsdruck wenigstens teilweise ausgleichen. Die hier gezeigte Ausgleichsfeder 54 ist demnach als Zugfeder ausgestaltet, wenn der Sorptionszonendruck unterhalb des Umgebungsdrucks liegt. Letzteres ist beispielsweise dann der Fall, wenn Waser oder Methanol als Arbeitsmedium verwendet wird.

Gemäß Fig. 8 kann zusätzlich oder alternativ eine Vorspannfeder 55 vorgesehen sein, über die das Kopplungselement 50 mit dem Ventilglied 46 gekoppelt ist. Hierdurch wird das Ventil 45 als Überdrucköffnungsventil 56 konfiguriert, das so angeordnet bzw. ausgestaltet ist, dass bei geschlossener fluidischer Verbindung 13 bzw. bei geschlossener Verbindungsöffnung 20 ab einem vorbestimmten Überdruck in der Sorptionszone 7 relativ zur Phasenwechselzone 8 und/oder zum Umgebungsdruck die fluidische Verbindung 13 bzw. die Verbindungsöffnung 20 geöffnet wird und Dampf in die Phasenwechselzone 8 abströmen kann. Hierdurch kann im Aufheizbetrieb bei einer Fehlfunktion der Steuereinrichtung 14 ein übermäßiger Druckanstieg in der Sorptionszone 7 vermieden werden. Über die Relationen der Durchmesser bzw. Querschnitte von Membran 51 bzw. Balg 52 einerseits und Ventilsitz 47 andererseits sowie über die Dimensionierung und Vorspannung der Vorspannfeder 55 kann konstruktiv festgelegt werden, bei welchen Differenzdrücken zwischen Sorptionszone 7, Phasenwechselzone 8 und Umgebung 34 sich das Ventilglied 46 automatisch vom Ventilsitz 47 abhebt und ein Überströmen von Arbeitsmedium von der Sorptionszone 7 zur Phasenwechselzone 8 bewirkt. Damit kann auch bei einer Fehlfunktion von Prozess-Steuerungselementen sichergestellt werden, dass sich keine kritischen Drücke innerhalb des Sorptionsmoduls 2 aufbauen können.

In einer nicht dargestellten Ausführungsform kann die Sicherheitsöffnungsfunktion durch eine geeignet ausgeformte elastischen Dichtung erfüllt werden, die bei einem kritischen Differenzdruck zwischen Sorptionszone und Phasenwechselzone vom Ventilsitz abhebt, während sie bei umgekehrtem Differenzdruck stärker in den Ventilsitz gepresst wird.

Die Funktionsweise des Sorptionsmoduls 2 als Wärme- und/oder Kältespeicher wird im Folgenden anhand von Fig. 1 kursorisch erläutert.

In einem geladenen Ausgangszustand, bei dem ein möglichst hoher Anteil des im Sorptionsmodul 2 enthaltenen Arbeitsmediums in der Phasenwechselstruktur 11 in kondensierter Form vorliegt und die Sorptionszone 7 weitgehend oder vollständig desorbiert ist, ist die Steuereinrichtung14 in ihre Schließstellung verstellt. Dadurch wird verhindert, dass Arbeitsmedium - der Druckdifferenz zwischen den beiden Zonen 7, 8 folgend - von der Phasenwechselzone 8 in die Sorptionszone 7 strömen kann. In diesem Ausgangszustand besitzt das Sorptionsmodul 2 sowohl Wärmekapazität als auch Kältekapazität, so dass darin sowohl Wärmeenergie, als auch Kälteenergie, also Wärmeaufnahmekapazität gespeichert sind. Im Einsatzfall als Wärmespeicher und zum Abruf der gespeicherten Wärme wird zunächst der der Sorptionszone 7 zugeordnete Sorptionskreis 3 mit der aufzuheizenden Wärmesenke, z.B. mit dem Kühlkreis eines noch kalten Verbrennungsmotors, verbunden. Zum gewünschten Zeitpunkt einer Freisetzung der gespeicherten Wärme wird die Steuereinrichtung 14 geöffnet, wodurch Arbeitsmediumdampf von der Phasenwechselzone 8 zur Sorptionszone 7 strömt und von der Sorptionsstruktur 9 adsorbiert wird. Die Folge davon ist, dass sich die Sorptionsstruktur 9 aufheizt und dadurch die an den Sorptionskreis 3 angeschlossene Wärmesenke erwärmt. Dabei arbeitet die Phasenwechselstruktur 11 als Verdampfer zum Verdampfen des darin eingelagerten flüssigen Arbeitsmediums. Die hierbei erforderliche Verdampfungswärme kann über den Phasenwechselpfad 12 zugeführt werden, wodurch sich das darin strömende Phasenwechselmedium abkühlt und eine Wärmequelle auf niedrigem Temperaturniveau kühlen kann. Der Phasenwechselpfad 12 bildet dabei also eine Wärmesenke, mit der gleichzeitig eine Wärmequelle abgekühlt werden kann. Wenn kein Bedarf an der gleichzeitig freigesetzten Kälte besteht, wird der Phasenwechselkreis 4 thermisch, z.B. mittels eines Wärmeübertragers an ein möglichst großes Wärmereservoir, z.B. die Umgebung 34, angekoppelt.

Im Einsatzfall als Kältespeicher und zum Abruf der gespeicherten "Kälte" wird zunächst der der Phasenwechselzone 8 zugeordnete Phasenwechselkreis 4 mit der abzukühlenden Wärmequelle, z.B. mittels eines Wärmeübertragers, in thermischen Kontakt gebracht. Zum gewünschten Zeitpunkt einer Freisetzung der gespeicherten "Kälte" wird die Steuereinrichtung 14 geöffnet, wodurch Arbeitsmediumdampf von der Phasenwechselzone 8 zur Sorptionszone 7 strömt und von der Sorptionsstruktur 9 adsorbiert wird. Die Folge davon ist, dass sich die Sorptionszone 7 aufheizt und dadurch die an den Sorptionskreis 3 angeschlossene Wärmesenke erwärmt. Die Phasenwechselstruktur 11 arbeitet dabei als Verdampfer zum Verdampfen des darin eingelagerten flüssigen Arbeitsmediums. Die hierbei erforderliche Verdampfungswärme kann über den Phasenwechselkreis 4 zugeführt werden, wodurch sich das darin strömende Arbeitsmedium abkühlt und eine Wärmequelle auf niedrigem Temperaturniveau kühlen kann. Der Phasenwechselkreis 4 bildet dabei also eine Wärmesenke, mit der gleichzeitig eine Wärmequelle abgekühlt werden kann. Wenn kein Bedarf an der gleichzeitig freigesetzten Adsorptionswärme besteht, wird der Sorptionskreis 3 thermisch, z.B. mittels eines Wärmeübertragers, an ein möglichst großes Wärmereservoir, z.B. an die Umgebung 34, angekoppelt.

Der Entladevorgang des Wärme- und/oder Kältespeichers kann solange durchgeführt werden, bis das gesamte Arbeitsmedium verdampft und damit der Speicher entladen ist.

## Patentansprüche

1. Sorptionsmodul für eine Sorptionstemperiereinrichtung (1)
- mit einem Gehäuse (5), das einen Arbeitsraum (6) umschließt, in dem eine Sorptionszone (7) und eine Phasenwechselzone (8) angeordnet sind und in dem ein Arbeitsmedium zwischen der Sorptionszone (7) und der Phasenwechselzone (8) reversibel verlagerbar ist,
- wobei in der Sorptionszone (7) eine Sorptionsstruktur (9) angeordnet ist, die mit einem Sorptionspfad (10) zum Führen eines Sorptionspfadmediums wärmeübertragend gekoppelt ist,
- wobei in der Phasenwechselzone (8) eine Phasenwechselstruktur (11) angeordnet ist, die mit einem Phasenwechselpfad (12) zum Führen eines Phasenwechselpfadmediums wärmeübertragend gekoppelt ist,
- wobei eine Steuereinrichtung (14) zum Steuern einer fluidischen Verbindung (13), durch die hindurch das Arbeitsmedium zwischen der Sorptionszone (7) und der Phasenwechselzone (8) reversibel verlagerbar ist, vorgesehen ist,
- wobei die Steuereinrichtung (14) ein Stellglied (15) aufweist, das mit der fluidischen Verbindung (13) zusammenwirkt, derart, dass das Stellglied (15) abhängig von seiner Verstellung die fluidische Verbindung (13) steuert,
**dadurch gekennzeichnet,**
- **dass** die Steuereinrichtung (14) einen elektrisch oder elektromagnetisch arbeitenden Stellantrieb (16) zum Verstellen des Stellglieds (15) aufweist,
- **dass** der Stellantrieb (16) außen an eine Außenwandung (48) des Gehäuses (5) angebaut ist,
- **dass** das Stellglied (15) eine in der Außenwandung (48) ausgebildete Durchgangsöffnung (49) durchsetzt und in dem Arbeitsraum (6) mit der fluidischen Verbindung (13) zusammenwirkt.

2. Sorptionsmodul nach Anspruch 1,
**dadurch gekennzeichnet,**
**dass** eine elastische Membran (51) vorgesehen ist, die einerseits dicht mit dem Stellglied (15) und andererseits dicht mit der Außenwandung (48) verbunden ist und welche die Durchgangsöffnung (49) gegenüber dem Arbeitsraum (6) dichtet.

3. Sorptionsmodul nach einem der Ansprüche 1 und 2,
**dadurch gekennzeichnet,**
- **dass** im Gehäuse (5) eine Trennwand (19) vorgesehen ist, welche die Sorptionszone (7) von der Phasenwechselzone (8) fluidisch trennt,
- **dass** die fluidische Verbindung (13) durch wenigstens eine Verbindungsöffnung (20) gebildet ist, die in der Trennwand (19) ausgebildet ist und die mit der Steuereinrichtung (14) steuerbar ist.

4. Sorptionsmodul nach einem der Ansprüche 1 bis 3,
**dadurch gekennzeichnet,**
**dass** das Stellglied (15) als Ventil (45) mit einem verstellbaren Ventilglied (46) zum Steuern der fluidischen Verbindung (13) ausgestaltet ist.

5. Sorptionsmodul nach Anspruch 4,
**dadurch gekennzeichnet,**
**dass** das Ventilglied (46) mit einem Ventilsitz (47) zusammenwirkt, der in der Trennwand (19) die jeweilige Verbindungsöffnung (20) einfasst.

6. Sorptionsmodul nach Anspruch 4 oder 5,
**dadurch gekennzeichnet,**
**dass** das Ventil (45) als Überdrucköffnungsventil (56) ausgestaltet ist, das bei geschlossener fluidischer Verbindung (13) ab einem vorbestimmten Überdruck in der Sorptionszone (7) relativ zur Phasenwechselzone (8) und/oder relativ zur Umgebung (34) die fluidische Verbindung (13) öffnet.

7. Sorptionsmodul nach Anspruch 6,
**dadurch gekennzeichnet,**
**dass** das Überdrucköffnungsventil (56) ein Kopplungselement (50) aufweist, das mit Hilfe des Stellantriebs (16) verstellbar ist und das über eine Vorspannfeder (55) mit dem Ventilglied (46) gekoppelt ist.

8. Sorptionsmodul nach Anspruch 3 oder nach Anspruch 3 und einem der anderen vorhergehenden Ansprüche,
**dadurch gekennzeichnet,**
- **dass** das Gehäuse (5) quaderförmig ausgestaltet ist, in dem die Sorptionszone (7) und die Phasenwechselzone (8) nebeneinander angeordnet sind,
- **dass** die Trennwand (19) zwischen der Sorptionszone (7) und der Phasenwechselzone (8) angeordnet ist.

9. Sorptionsmodul nach Anspruch 8,
**dadurch gekennzeichnet,**
**dass** die Trennwand (19) eine Stufe (21) aufweist, in welcher die wenigstens eine Verbindungsöffnung (20) angeordnet ist.

10. Sorptionsmodul nach Anspruch 3 oder nach Anspruch 3 und einem der Ansprüche 1 bis 7,
**dadurch gekennzeichnet,**
- **dass** das Gehäuse (5) zylindrisch ausgestaltet ist,
- **dass** die Phasenwechselzone (8) die Sorptionszone (7) in einer Umfangsrichtung (27) des Gehäuses (5) ringförmig umschließt,
- **dass** die Trennwand (19) ringförmig ausgestaltet ist und radial zwischen der Sorptionszone (7) und der Phasenwechselzone (8) angeordnet ist.

11. Sorptionsmodul nach Anspruch 10,
**dadurch gekennzeichnet,**
- **dass** ein sich in Umfangsrichtung (27) des Gehäuses (5) erstreckender Mantel (26) des zylindrischen Gehäuses (5) doppelwandig und hohlwandig ausgestaltet ist,
- **dass** der Phasenwechselpfad (12) durch den Mantel (26) hindurchgeführt ist.

12. Sorptionsmodul nach Anspruch 9,
**dadurch gekennzeichnet,**
**dass** die Phasenwechselstruktur (11) mit einer dem Arbeitsraum (6) zugewandten Innenseite (35) des Mantels (26) wärmeübertragend in Kontakt steht, während sie von der zylindrischen Trennwand (19) radial beabstandet ist.

13. Sorptionstemperiereinrichtung,
- mit wenigstens einem Sorptionsmodul (2) nach einem der Ansprüche 1 bis 12,
- mit wenigstens einem Sorptionskreis (3), in dem das Sorptionspfadmedium zirkuliert und in den der Sorptionspfad (10) des jeweiligen Sorptionsmoduls (2) eingebunden ist,
- mit wenigstens einem Phasenwechselkreis (4), in dem das Phasenwechselpfadmedium zirkuliert und in den der Phasenwechselpfad (12) des jeweiligen Sorptionsmoduls (2) eingebunden ist.

## Claims

1. Sorption module for a sorption temperature-control device (1) comprising
- a housing (5) that encloses a working chamber (6) in which a sorption zone (7) and a phase change zone (8) are arranged and in which a working medium can be transferred reversibly between the sorption zone (7) and the phase change zone (8),
- wherein in the sorption zone (7) a sorption structure (9) is arranged, which is coupled in a heat-transmitting manner to a sorption path (10) for guiding a sorption path medium,
- wherein in the phase change zone (8) a phase change structure (11) is arranged, which is coupled in a heat-transmitting manner to a phase change path (12) for guiding a phase change path medium,
- wherein a control device (14) is provided for controlling a fluidic connection (13) through which the working medium is transferred reversibly between the sorption zone (7) and the phase change zone (8),
- wherein the control device (14) includes an actuating element (15), which cooperates with the fluidic connection (13) such that the actuating element (15) controls the fluidic connection (13) depending on an adjustment of the actuating element,
**characterised in that**
- the control device (14) comprises an electrically or electromagnetically operating actuating drive (16) for adjusting the actuating element (15),
- the actuating drive (16) is attached externally onto an outer wall (48) of the housing (5),
- the actuating element (15) passes through a through-opening (49) formed in the outer wall (48) and in the working chamber (6) cooperates with the fluidic connection (13).

2. Sorption module according to claim 1, **characterised in that** an elastic diaphragm (51) is provided, which is connected on the one hand tightly to the actuating element (15) and on the other hand is connected tightly to the outer wall (48) and which membrane seals the through-opening (49) from the working chamber (6).

3. Sorption module according to any of claims 1 and 2, **characterised in that**
- in the housing (5) a partition wall (19) is provided that fluidically separates the sorption zone (7) from the phase change zone (8),
- the fluidic connection (13) is formed by at least one connection opening (20) which is formed in the partition wall (19) and which can be controlled by the control device (14).

4. Sorption module according to any of claims 1 to 3, **characterised in that** the actuating element (15) is configured as a valve (45) including an adjustable valve element (46) for controlling the fluidic connection (13).

5. Sorption module according to claim 4, **characterised in that** the valve element (46) cooperates with a valve seat (47) that borders the respective connection opening (20) in the partition wall (19).

6. Sorption module according to claim 4 or claim 5, **characterised in that** the valve (45) is configured as an overpressure opening valve (56), which with a closed fluidic connection (13) opens the fluid connection (13) from a predetermined overpressure in the sorption zone (7) relative to the phase change zone (8) and/or relative to the surroundings (34).

7. Sorption module according to claim 6, **characterised in that** the overpressure opening valve (56) includes a coupling element (50) that is adjustable by means of the actuating drive (16) and which is coupled to the valve element (46) by a pre-tensioning spring (55).

8. Sorption module according to claim 3 or according to claim 3 and any of the other preceding claims, **characterised in that**
- the housing (5) is configured to be cuboid, in which the sorption zone (7) and the phase change zone (8) are arranged adjacent to one another,
- the partition wall (19) is arranged between the sorption zone (7) and the phase change zone (8).

9. Sorption module according to claim 8, **characterised in that** the partition wall (19) includes a step (21) in which the at least one connection opening (20) is arranged.

10. Sorption module according to claim 3 or according to claim 3 and any of claims 1 to 7, **characterised in that**
- the housing (5) is designed to be cylindrical,
- the phase change zone (8) encloses the sorption zone (7) annularly in a circumferential direction (27) of the housing (5),
- the partition wall (19) is annular and arranged radially between the sorption zone (7) and the phase change zone (8).

11. Sorption module according to claim 10, **characterised in that**
- a casing (26) of the cylindrical housing (5) extending in circumferential direction (27) of the housing (5) is configured to have a double wall and hollow wall,
- the phase change path (12) is guided through the casing (26).

12. Sorption module according to claim 9, **characterised in that** the phase change structure (11) is in contact in a heat-transmitting manner with an inner side (35) of the casing (26) that faces the working chamber (6), whereas it is at a radial distance from the cylindrical partition wall (19).

13. Sorption temperature-control device, comprising
- at least one sorption module (2) according to any of claims 1 to 12,
- at least one sorption circuit (3) in which the sorption path medium circulates and into which the sorption path (10) of the respective sorption module (2) is integrated,
- at least one phase change circuit (4) in which the phase change path medium circulates and into which the phase change path (12) of the respective sorption module (2) is integrated.

## Revendications

1. Module de sorption pour un dispositif de thermorégulation à sorption (1)
- avec un boîtier (5), qui entoure un espace de travail (6), dans lequel une zone de sorption (7) et une zone de changement de phase (8) sont agencées et dans lequel un milieu de travail peut être déplacé de manière réversible entre la zone de sorption (7) et la zone de changement de phase (8),
- dans lequel une structure de sorption (9), qui est couplée de manière thermoconductrice à un trajet de sorption (10) pour le guidage d'un milieu de trajet de sorption, est agencée dans la zone de sorption (7),
- dans lequel une structure de changement de phase (11), qui est couplée de manière thermoconductrice à un trajet de changement de phase (12) pour le guidage d'un milieu de trajet de changement de phase, est agencée dans la zone de changement de phase (8),
- dans lequel un dispositif de commande (14) est prévu pour la commande d'une liaison fluidique (13), à travers laquelle le milieu de travail peut être déplacé de manière réversible entre la zone de sorption (7) et la zone de changement de phase (8),
- dans lequel le dispositif de commande (14) présente un organe de réglage (15), qui coopère avec la liaison fluidique (13) de telle sorte que l'organe de réglage (15) commande la liaison fluidique (13) en fonction de son réglage,
**caractérisé en ce**
- **que** le dispositif de commande (14) présente un entraînement de réglage (16) à fonctionnement électrique ou électromagnétique pour le réglage de l'organe de réglage (15),
- **que** l'entraînement de réglage (16) est monté à l'extérieur d'une paroi extérieure (48) du boîtier (5),
- **que** l'organe de réglage (15) traverse une ouverture de passage (49) réalisée dans la paroi extérieure (48) et coopère avec la liaison fluidique (13) dans l'espace de travail (6).

2. Module de sorption selon la revendication 1,
**caractérisé en ce**
**qu'**une membrane élastique (51) est prévue, qui est reliée d'un côté de manière étanche à l'organe de réglage (15) et d'un autre côté de manière étanche à la paroi extérieure (48) et laquelle étanchéifie l'ouverture de passage (49) par rapport à l'espace de travail (6).

3. Module de sorption selon l'une quelconque des revendications 1 et 2,
**caractérisé en ce**
- **qu'**une cloison de séparation (19), laquelle sépare fluidiquement la zone de sorption (7) de la zone de changement de phase (8), est prévue dans le boîtier (5),
- **que** la liaison fluidique (13) est formée par au moins une ouverture de liaison (20), qui est réalisée dans la cloison de séparation (19) et qui peut être commandée avec le dispositif de commande (14).

4. Module de sorption selon l'une quelconque des revendications 1 à 3,
**caractérisé en ce**
**que** l'organe de réglage (15) est réalisé en tant que soupape (45) avec un élément de soupape réglable (46) pour la commande de la liaison fluidique (13).

5. Module de sorption selon la revendication 4,
caractérisé en ce
l'élément de soupape (46) coopère avec un siège de soupape (47), qui encadre l'ouverture de liaison respective (20) dans la cloison de séparation (19).

6. Module de sorption selon la revendication 4 ou 5,
**caractérisé en ce**
**que** la soupape (45) est réalisée en tant que soupape d'ouverture de surpression (56), qui ouvre la liaison fluidique (13) en cas de liaison fluidique fermée (13) à partir d'une surpression prédéterminée dans la zone de sorption (7) par rapport à la zone de changement de phase (8) et/ou par rapport à l'environnement (34).

7. Module de sorption selon la revendication 6,
**caractérisé en ce**
**que** la soupape d'ouverture de surpression (56) présente un élément de couplage (50), qui est réglable à l'aide de l'entraînement de réglage (16) et qui est couplé à l'élément de soupape (46) par le biais d'un ressort de précontrainte (55).

8. Module de sorption selon la revendication 3 ou selon la revendication 3 et l'une quelconque des autres revendications précédentes,
**caractérisé en ce**
- **que** le boîtier (5) est réalisé en forme de parallélépipède, dans lequel la zone de sorption (7) et la zone de changement de phase (8) sont agencées l'une à côté de l'autre,
- **que** la cloison de séparation (19) est agencée entre la zone de sorption (7) et la zone de changement de phase (8).

9. Module de sorption selon la revendication 8,
**caractérisé en ce**
**que** la cloison de séparation (19) présente un gradin (21), dans lequel l'au moins une ouverture de liaison (20) est agencée.

10. Module de sorption selon la revendication 3 ou selon la revendication 3 et l'une quelconque des revendications 1 à 7,
**caractérisé en ce**
- **que** le boîtier (5) est réalisé de manière cylindrique,
- **que** la zone de changement de phase (8) entoure de manière annulaire la zone de sorption (7) dans une direction périphérique (27) du boîtier (5),
- **que** la cloison de séparation (19) est réalisée de manière annulaire et est agencée radialement entre la zone de sorption (7) et la zone de changement de phase (8).

11. Module de sorption selon la revendication 10,
**caractérisé en ce**
- **qu'**une enveloppe (26) du boîtier cylindrique (5) s'étendant dans la direction périphérique (27) du boîtier (5) est réalisée à double paroi ou à paroi creuse,
- **que** le trajet de changement de phase (12) est guidé à travers l'enveloppe (26).

12. Module de sorption selon la revendication 9,
**caractérisé en ce**
**que** la structure de changement de phase (11) est en contact thermoconducteur avec un côté intérieur (35) de l'enveloppe (26) tourné vers l'espace de travail (6), pendant qu'elle est radialement espacée de la cloison de séparation cylindrique (19).

13. Dispositif de thermorégulation à sorption,
- avec au moins un module de sorption (2) selon l'une quelconque des revendications 1 à 12,
- avec au moins un circuit de sorption (3), dans lequel le milieu de trajet de sorption circule et dans lequel le trajet de sorption (10) du module de sorption respectif (2) est intégré,
- avec au moins un circuit de changement de phase (4), dans lequel le milieu de trajet de changement de phase circule et dans lequel le trajet de changement de phase (12) du module de sorption respectif (2) est intégré.
